# EUROPÄISCHE PATENTANMELDUNG

(11) **EP 1 050 994 A2**
(43) Veröffentlichungstag der Anmeldung: **08.11.2000**
(21) Anmeldenummer: 00440114.7
(22) Anmeldetag: 25.04.2000
(51) Int. Cl.: H04L 12/24

(54) **Verfahren zur Unterstützung der Kommunikation zwischen Netzelementen und Netzelement-Managern**

(30) Priorität: 05.05.1999 DE 19920545
(71) Anmelder: ALCATEL, 75008 Paris (FR)
(72) Erfinder: Daase, Detlef, Dr., 12205 Berlin (DE); Müller, Irina, 12555 Berlin (DE)
(74) Vertreter: Zinsinger, Norbert

(57) **Zusammenfassung**

Die Erfindung betrifft eine Konvertereinheit (KON1 bis KON3) und ein Verfahren zur Unterstützung der Kommunikation zwischen mindestens einem Netzelement (NE1 bis NE5) und mindestens einem Netzelement-Manager (NEM). Die Konvertereinheit (KON1 bis KON3) ist mit ein oder mehreren ersten Funktionseinheiten und mit diesen ersten Funktionseinheiten über eine einheitliche Schnittstelle verkoppelbaren ein oder mehreren zweiten Funktionseinheiten versehen. Die ein oder mehreren ersten Funktionseinheiten tauschen über eine Schnittstelle Netzwerkmanagement-Nachrichten, die einem jeweiligen speziellen Netzwerkmanagement-Protokoll zugeordnet sind, mit einem Netzelement oder einem Netzelement-Manager aus und bearbeiten das jeweilige spezielle Netzwerkmanagement-Protokoll. Die ein oder mehreren zweiten Funktionseinheiten bilden eine Darstellung basierend auf einer jeweiligen ersten Semantik auf eine Darstellung basierend auf einer jeweiligen zweiten Semantik ab und bieten die jeweilig Abbildungsfunktion den ersten Funktionseinheiten jeweils über die für alle ersten Funktionseinheiten einheitliche Schnittstelle an.

## Beschreibung

Die Erfindung betrifft eine Konvertereinheit zur Unterstützung der Kommunikation zwischen mindestens einem Netzelement und mindestens einem Netzelement-Manager noch dem Oberbegriff von Anspruch 1, und ein Verfahren zur Unterstützung der Kommunikation zwischen mindestens einem Netzelement und mindestens einem Netzelement-Manager nach dem Oberbegriff von Anspruch 11.

Die Erfindung geht von dem üblichen Aufbau eines Netwerkmanagement-Systems für Telekommunikationsnetze aus, wie er beispielsweise in dem Artikel "Telecommunications Management Network (TMN): Architektur, Schnittstellen und Anwendungen, ntz Bd. 43, Heft 6, 1990 von Rüdiger Falkner und Harald Müllner beschrieben wird.

Eine Netzwerkmanagement-Zentrale ist über ein Kommunikationsnetz mit den zu steuernden Netzelementen verbunden. Netzelemente können hierbei von verschiedenartigen vermittlungstechnischen oder übertragungstechnischen Einrichtungen gebildet werden, die über verschiedenartige Netzwerkmanagement-Schnittstellen verfügen, beispielsweise über Q1, Q2 oder Q3 Schnittstellen. Um die Steuerung solcher verschiedenartiger Netzelemente zu ermöglichen, werden Anpassungseinrichtungen (Mediation Device) zwischen der Netzwerkmanagement-Zentrale und den Netzelementen vorgesehen. Diese Anpassungseinrichtungen erbringen eine Konverterfunktion für die Kommunikation zwischen den jeweiligen mit ihr verbundenen Netzelementen und den diesen Netzelementen zugeordneten Netzelement-Managern der Netzwerkmanagement-Zentrale. Diese Konverterfunktion kann nicht nur eine Konvertierung von Kommunikationsprotokollen umfassen, sondern kann auch eine Informationsmodell-Konvertierung erfordern. Ein Beispiel hierfür ist eine Konvertierung einer herstellerspezifischen Q3 Schnittstelle in eine betreiberspezifische Q3 Schnittstelle. Die Konverterfunktion wird hierbei als Gesamtfunktion gemäß den jeweiligen Anforderungen entwickelt.

Der Erfindung liegt nun die Aufgabe zugrunde, die Kommunikation zwischen Netzelementen und Netzelement-Managern mittels einer leistungsfähigen Konverterfunktion zu unterstützen.

Diese Aufgabe wird gelöst durch eine Konvertereinheit zur Unterstützung der Kommunikation zwischen mindestens einem Netzelementen und mindestens einem Netzelement-Manager nach der Lehre von Anspruch 1, und ein Verfahren zur Unterstützung der Kommunikation zwischen mindestens einem Netzelement und mindestens einem Netzelement-Manager nach der Lehre von Anspruch 11.

Der Erfindung liegt hierbei der Gedanke zugrunde, bei der Konvertierung Protokoll-Funktionen von Semantik-Funktionen zu trennen und Protokoll-Funktionseinheiten und Semantik-Funktionseinheiten bereitzustellen, die miteinander über einheitliche Schnittstellen interagieren. Spezielle Protokoll-Funktionseinheiten tauschen hierbei Netzwerkmanagement-Nachrichten, die einem jeweiligen speziellen Netzwerkmanagement-Protokoll zugeordnet sind, mit einem Netzelement oder einem Netzelement-Manager aus und bearbeiten das jeweilige spezielle Netzwerkmanagement-Protokoll. Die Semantik-Funktionseinheiten bilden eine Darstellung basierend auf einer jeweiligen ersten Semantik auf eine Darstellung basierend auf einer jeweiligen zweiten Semantik ab und bieten die jeweilige Abbildungsfunktion den oben beschriebenen Protokoll-Funktionseinheiten jeweils über eine für alle ersten Funktionseinheiten einheitliche Schnittstelle an.

Der Vorteil der Erfindung besteht darin, daß eine schnelle Entwicklung leistungsfähiger Konverterfunktionen für die Kommunikation zwischen Netzelementen und Netzelement-Managern ermöglicht wird. Dieser Vorteil zeigt sich insbesondere in Netzwerkmanagement-Systemen, die über eine Vielzahl unterschiedlicher Netzelemente verfügen und deshalb eine Vielzahl unterschiedlicher Konverterfunktionen für die Kommunikation zwischen diesen Netzelementen und den Netzelement Managern benötigen. Weitere Vorteile sind der aus der Erfindung resultierende insgesamt niedrigere Entwicklungsaufwand, die Möglichkeit, Software in hohem Maße wiederzuverwenden und der geringere Testaufwand.

Weiter läßt sich auf diese Weise unter Beibehaltung obiger Vorteile eine leistungsfähige Konvertereinheit aufbauen, die eine Kommunikation mit einer Vielzahl verschiedenartiger Netzelemente ermöglicht.

Vorteilhafte Ausgestaltungen der Erfindung sind den Unteransprüchen zu entnehmen.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines Netzwerkmanagement-Systems mit mehreren erfindungsgemäßen Konvertereinheiten.
- Fig. 2: zeigt eine funktionelle Darstellung einer Konvertereinheit nach Fig. 1 für ein erstes Ausführungsbeispiel.
- Fig. 3: zeigt eine funktionelle Darstellung einer Konvertereinheit nach Fig. 1 für ein zweites Ausführungsbeispiel.
- Fig. 4: zeigt eine funktionelle Darstellung einer Konvertereinheit nach Fig. 1 für ein viertes Ausführungsbeispiel.

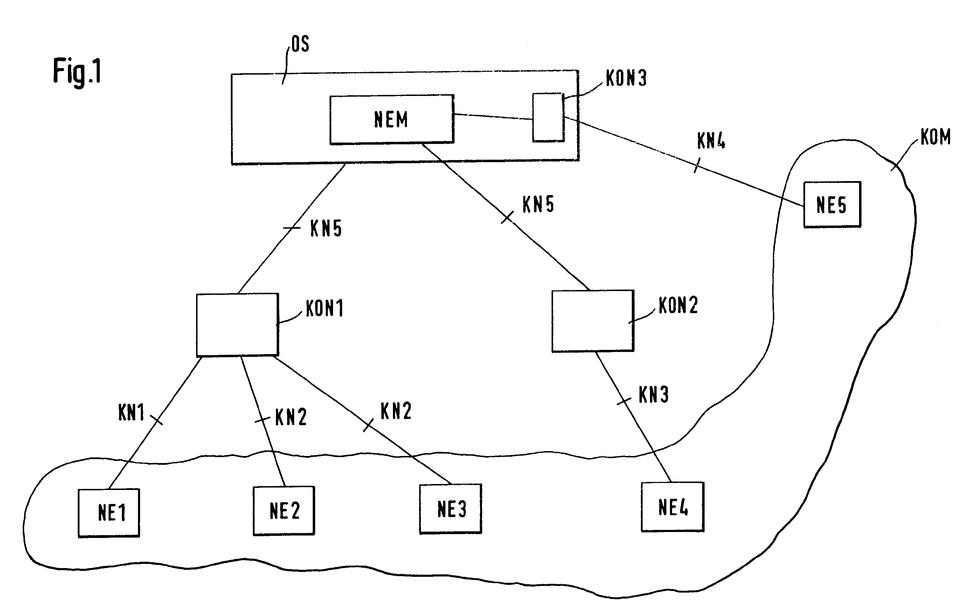

Fig. 1 zeigt ein Netzwerkmanagement-System für ein Kommunikationssystem KOM. Das Netzwerkmanagement-System weist eine Netzführungszentrale OS, drei Konvertereinheiten KON1 bis KON3 und mehrere Netzelemente NE1 bis NE5 auf. Die Netzelemente NE1 bis NE3 sind über die Kommunikationsnetze KN1 bzw. KN2 mit der Konvertereinheit KON1 und das Netzelement NE4 ist über das Kommunikationsnetze KN3 mit der Konvertereinheit KON2 verbunden. Die Konvertereinheiten KON1 und KON2 sind über das Kommunikationsnetz KN5 und mit der Netzführungszentrale OS verbunden. Das Netzelement NE5 ist über das Kommunikationsnetz KN4 mit der Netzführungszentrale OS verbunden.

Das Kommunikationssystem KOM stellt ein Kommunikationssystem zur Sprachkommunikation, beispielsweise ein ISDN Kommunikationssystem (ISDN = Integrated Services Digital Network) dar. Es ist jedoch auch möglich, daß das Kommunikationssystem KOM weiter der Daten und/ oder Bildkommunikation dient. So kann es sich bei dem Kommunikationssystem KOM beispielsweise auch um ein IP Netz (IP = Internet Protocol) handeln, das auf mehreren miteinander gekoppelten ATM und ETHERNET Übertragungsnetzen aufsetzt.

Von den Netzelement des Kommunikationsnetzes KOM, die von dem Netzwerkmanagement-System nach Fig. 1 verwaltet werden, sind in Fig. 1 beispielhaft fünf Netzelemente NE1 und NE5 gezeigt. Das Netzelement NE1 stellt beispielsweise einen Vermittlungsknoten des Kommunikationsnetze KOM dar, beispielsweise eine ISDN Vermittlungsstelle, und das Netzelement NE2 stellt einen Übertragungsknoten des Kommunikationsnetzes KOM dar, beispielsweise ein SDH Netzelement (SDH = Synchrone Digitale Hierarchie). Es ist hierbei möglich, daß die Netzelemente NE1 bis NE5 je nach Art des Kommunikationsnetzes KOM von beliebigen anderen Netzelementen gebildet werden können: Es kann sich bei den Netzelementen NE1 bis NE5 beispielsweise auch um Router, Brigdes oder Gateways eines Datennetzes handeln.

Die Konvertereinheiten KON1 und KON2 dienen der Anpassung der mit ihnen verbundenen Netzelemente an die Netzwerkmanagementzentrale OS. Die Konvertereinheiten KON1 und KON2 werden jeweils von einem oder mehreren über ein Kommunikationsmedium verbundenen Rechnerknoten gebildet. Die Rechnerknoten sind beispielsweise durch X.25, #7, Ethernet oder Token-Ring Kommunikationsnetz oder über einen Software Bus miteinander verbunden. Der Rechnerknoten oder die Rechnerknoten bilden eine Hardware-Plattform, bestehend aus Prozessoren, Speichereinrichtungen und peripheren Komponenten, auf der eine Software-Plattform aufsetzt, die beispielsweise ein Betriebssystem und ein Datenbanksystem umfaßt. Auf dieser Systemplattform setzen dann Anwendungsprogramme auf, die die Funktionen der jeweiligen Konvertereinheit KON1 bzw. KON2 erbringen. Aus funktioneller Sicht erbringen die Anwendungsprogramme u. a. eine Konverterfunktion für die Kommunikation zwischen der Netzwerkmanagementzentrale OS und den mit der jeweiligen Konvertereinheit verbundenen Netzelementen.

Bei den Kommunikationsnetzen KN1 bis KN5 handelt es sich um Datennetze, über die Netzwerkmanagement-Nachrichten übertragbar sind. Es kann sich bei den Kommunikationsnetzen KN1 bis KN5 beispielsweise um Signalisierungsnetze, X.25 Paketnetze oder IP-Netze handeln.

Die Netzführungszentrale OS wird von einer OSI Netzwerkmanagement-Zentrale gebildet, die beispielsweise gemäß ITU-T M.3010 aufgebaut ist. Es kann sich bei Netzführungszentrale OS natürlich auch um eine Netzwerkmanagement-Zentrale für Datennetze handeln, die mit den zu steuernden Netzelementen mittels des SNMP Netzwerkmanagement-Protokolls (SNMP = Simple Network Management Protocol) kommuniziert. Es ist auch möglich, daß die Netzführungszentrale sowohl Fernsprech- als auch Datennetzes gleichzeitig verwaltet.

Die Netzführungszentrale OS wird von einem oder mehreren über ein Kommunikationsmedium verbundenen Rechnerknoten gebildet. Die Rechnerknoten sind beispielsweise durch X.25, #7, Ethernet oder Token-Ring Kommunikationsnetz oder über einen Software Bus miteinander verbunden. Der Rechnerknoten oder die Rechnerknoten bilden eine Hardware-Plattform, bestehend aus Prozessoren, Speichereinrichtungen und peripheren Komponenten, auf der eine Software-Plattform aufsetzt, die beispielsweise ein Betriebssystem und ein Datenbanksystem umfaßt. Auf dieser Systemplattform setzen dann eine Vielzahl von Anwendungsprogrammen auf, die die Funktionen der Netzführungszentrale OS erbringen. Aus funktioneller Sicht weist die Netzführungszentrale OS einen oder mehrere Netzelement-Manager auf, von denen in Fig. 1 beispielsweise ein Netzelement-Manager NEM gezeigt ist. Weiter weist die Netzführungszentrale OS aus funktioneller Sicht eine Konvertereinheit KON3 auf. Der Netzelement-Manager NEM kommuniziert über die Kommunikationsnetze KN1 bis KN4 und die Konvertereinheiten KON1 bis KON3 mit den Netzelementen NE1 und NE5 und tauscht hierbei mit den Netzelementen NE1 und NE5 Netzwerkmanagement-Nachrichten aus. Durch den Austausche dieser Netzwerkmanagement-Nachrichten überwacht, verwaltet und steuert der Netzelement-Manager NEM die mit ihm verbundenen Netzelemente NE1 bis NE5. Die Konvertereinheit KON3 erbringen ebenso wie die Konvertereinheiten KON1 und KON2 eine Konverterfunktion für die Kommunikation zwischen dem Netzelement-Manager NEM und den mit ihm verbundenen Netzelementen.

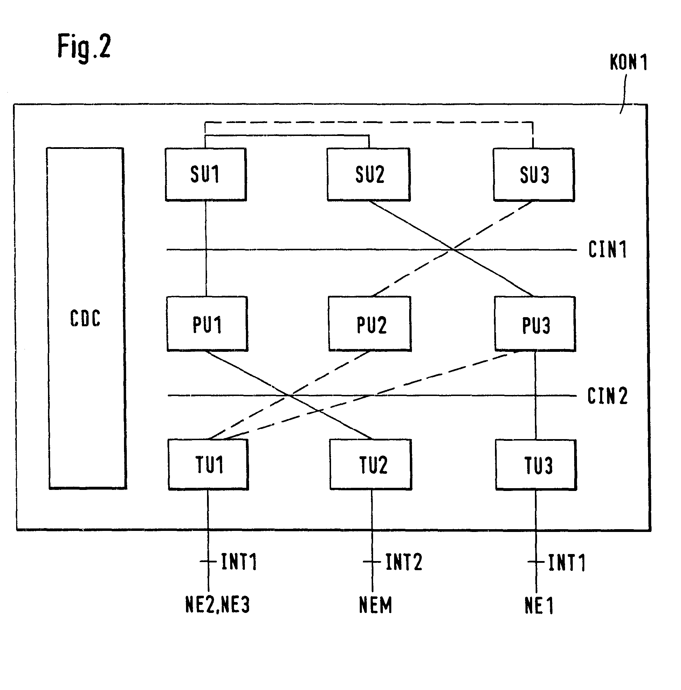

Anhand von Fig. 2 wird nun der detaillierte Aufbau der Konvertereinheit KONI verdeutlicht.

Fig. 2 zeigt einen Ausschnitt aus dem funktionellen Aufbau der Konvertereinheit KON1.

Die Konvertereinheit KON1 ist über eine Schnittstelle INT1 mit den Netzelementen NE1 bis NE3 und über eine Schnittstelle INT2 mit dem Netzelement-Manager NEM verbunden. Die Konvertereinheit KON1 weist eine Steuereinheit CDC und neun Funktionseinheiten SU1 bis SU3, PU1 bis PU3 und TU1 bis TU3 auf. Es ist natürlich auch möglich, daß die Konvertereinheit KON1 über die Schnittstelle INT1 mit einer anderen Anzahl von Netzelementen verkoppelt ist.

Die Steuereinheit CDC und die Funktionseinheiten SU1 bis SU3, PU1 bis PU3 und TU1 bis TU3 können programmtechnisch beispielsweise jeweils als ein oder mehrere Objekte modelliert sein, die die jeweiligen unten beschriebenen Funktionen ausführen. Der Code und die Daten eines Objektes werden an einer Objekt- Schnittstelle durch eine Summe von Attributen und Funktionen repräsentiert, auf die andere Objekte zugreifen können. Diese Objekte können beispielsweise über eine ORB Infrastruktur (ORB = Objekt Request Broker Architecture), beispielsweise über die CORBA Objekt Infrastruktur oder DCOM Objekt Infrastruktur, miteinander kommunizieren. Objekt-Anforderungs-Broker (ORB) stellen hierbei eine Infrastruktur zur Verfügung, die es den Objekten erlaubt, auch in einer verteilten Umgebung zu kommunizieren. Damit ist es möglich, die Konvertereinheit KON1 über mehrere Rechnerknoten zu verteilen oder die Funktionen der Konvertereinheit KON1 auch parallel auf Rechnerknoten auszuführen, die hauptsächlich für andere Anwendungen verwendet werden. Natürlich ist auch eine andere programmtechnische Modellierung der Steuereinheit CDC und die Funktionseinheiten SU1 bis SU3, PU1 bis PU3 und TU1 bis TU3 möglich. Sie können beispielsweise jeweils von Unterprogrammen oder Finte State Machines gebildet werden.

Die Konvertereinheit KON1 kann somit zum einem von einem oder mehreren Rechnerknoten und darauf ablaufenden Anwendungsprogrammen gebildet werden, die die hier beschriebene Konverterfunktion ausführen. Andererseits kann die Konvertereinheit KON1 aber auch durch ein Anwendungsprogramm selbst gebildet werden, das bei seiner Ausführung die hier beschriebene Konverterfunktion ausführen. Weiter kann die Konvertereinheit auch durch ein computerlesbares Speichermedium mit einem solchem, auf dem Speichermedium abgespeicherten Anwendungsprogramm gebildet werden.

Die Funktionseinheiten SU1 bis SU3, PU1 bis PU3 und TU1 bis TU3 stellen jeweils verschiedenartige Gruppen von Funktionseinheiten dar. Jede dieser Gruppen von Funktionseinheiten kann auch eine andere Anzahl von Funktionseinheiten enthalten, es muß jedoch mindestens eine Funktionseinheit in jeder der Gruppen vorhanden sein. Die Funktionseinheiten SU1 bis SU3 der ersten Gruppe sind mit den Funktionseinheiten PU1 bis PU3 der zweiten Gruppe über eine einheitliche Schnittstelle CIN1 beliebig koppelbar. Die Funktionseinheiten PU1 bis PU3 der zweiten Gruppe sind mit den Funktionseinheiten TU1 bis TU3 der dritten Gruppe über eine einheitliche Schnittstelle CIN2 beliebig koppelbar. Die Schnittstellen CIN1 und CIN2 stellen beispielsweise jeweils eine einheitliche API (Application Program Interface) oder Objekt-Schnittstellen dar, über die alle der an der jeweiligen Schnittstelle anliegenden Funktionseinheiten SU1 bis SU3 und PU1 bis PU3 bzw. PU1 bis PU3 und TU1 bis TU3 verfügen.

Die Funktionseinheiten der ersten Gruppe von Funktionseinheiten dienen der Semantik-Konvertierung. Semantik ist der Inhalt, die Bedeutung von Daten und Funktionen. Die Funktionseinheiten der zweiten Gruppe von Funktionseinheiten dienen der Konvertierung von Netzwerkmanagement-Protokollen. Diese Protokolle dienen dem Transport der Semantik. Syntax ist die formale Beschreibung, Darstellung der Semantik. Die Protokollkonvertierung entspricht einer Konvertierung der Syntax der Daten und Funktionen des jeweiligen Netzwerkmanagement-Protokolls, also einer reinen Abbildung von Daten-Strukturen. Die Funktionseinheiten der dritten Gruppe von Funktionseinheiten dienen der Bearbeitung von Transportprotokollen. Es ist auch möglich, auf diese Gruppe von Funktionseinheiten zu verzichten oder deren Funktionen in Funktionseinheiten der zweiten Gruppe von Funktionseinheiten zu integrieren.

Die Funktionseinheiten der ersten Gruppe stellen somit jeweils eine spezielle Semantik-Konvertierung bereit und die Funktionseinheiten der zweiten Gruppe stellen jeweils eine spezielle Syntaxkonvertierung bereit. Ein aus Daten und Funktion bestehenden Informationsteil wird von einer Funktionseinheit der zweiten Gruppe über die Schnittstelle CIN1 an eine Funktionseinheit der ersten Gruppe übergeben, die sodann eine Semantik-Konvertierung vornimmt und über die Schnittstelle CIN1 einen entsprechend geänderten Funktionsteil zurückgibt.

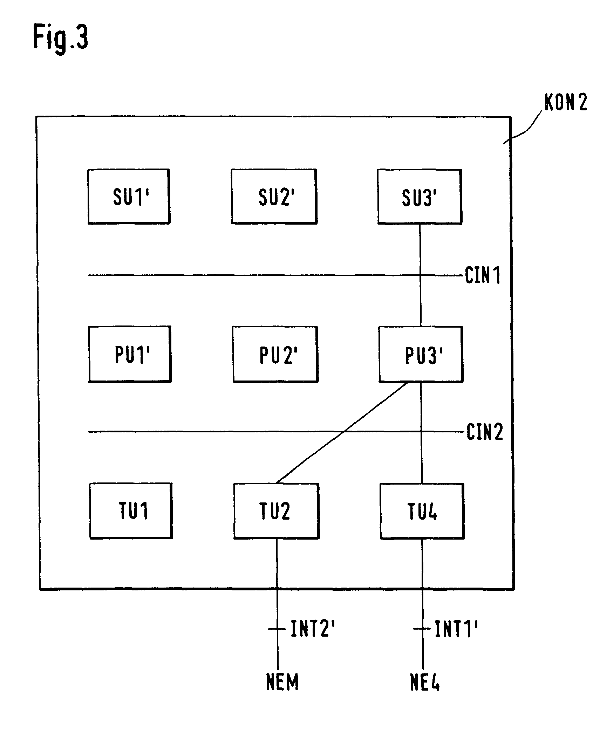

Es ist hierbei möglich, daß Funktionseinheiten der zweiten Gruppe jeweils eine Syntaxkonvertierung zwischen zwei verschiedenartigen Netzwerkmanagement-Protokollen bereitstellen (Fig. 3) oder eine Konvertierung der Syntax der Daten und Funktionen des jeweiligen Netzwerkmanagement-Protokolls zu einer einheitlichen Syntax durchführen (Fig. 2). Ebenso ist es möglich, daß die Funktionseinheiten der ersten Gruppe jeweils eine Semantik-Konvertierung zwischen zwei spezifischen Semantika (z. B. basieren auf einem spezifischen herstellerspezifischen Informationsmodell und einem speziellen betreiberspezifischen Informationsmodell) durchführen (Fig. 3) oder eine Konvertierung von einer spezifischen zu einer allgemeinen Semantik durchführen (Fig. 2). Beide Möglichkeiten können beliebig kombiniert werden, je nach Kombination ändert sich dann die Anzahl der Funktionseinheiten, die für Erbringung der Konvertierung interagieren.

Die Funktionseinheiten SU1 bis SU3 stellen Semantik-Funktionseinheiten dar. Sie bilden eine Darstellung basierend auf einer jeweiligen ersten Semantik auf eine Darstellung basierend auf einer jeweiligen zweiten Semantik ab und bieten die jeweilige Abbildungsfunktion den Funktionseinheiten PU1 bis PU3 jeweils über eine für alle Funktionseinheiten PU1 bis PU3 einheitliche Schnittstelle CIN1 an.

Die Funktionseinheiten SU1 bis SU3 stellen jeweils unterschiedliche Semantik-Konvertierungen bereit. Die Funktionseinheit SU2 stellt beispielsweise die Konvertierung einer Darstellung basierend auf der Semantik eines ersten herstellerspezifischen Informationsmodells auf eine Darstellung basierend auf einer allgemeine Semantik bereit. Die Funktionseinheit SU3 stellt beispielsweise die Konvertierung einer Darstellung basierend auf der Semantik eines zweiten herstellerspezifischen Informationsmodells auf eine Darstellung basierend auf der allgemeine Semantik bereit. Die Funktionseinheit SU2 stellt beispielsweise die Konvertierung einer Darstellung basierend auf der Semantik eines betreiberspezifischen Informationsmodells auf eine Darstellung basierend auf der allgemeine Semantik bereit. Die Funktionseinheiten SU1 bis SU3 sind über die Darstellung basierend auf der allgemeine Semantik verkoppelbar und führen die jeweilige Abbildungsfunktion jeweils unabhängig von darunterliegenden Management-Protokollen durch. Netzelemente und Netzelement-Manager werden somit auf der Semantikebene gekoppelt.

Bei der den von den Funktionseinheiten SU1 bis SU3 durchgeführten Abbildungen wird die Semantik, also die Bedeutung der einzelnen Parameter einer Datenstrukturen für sich und in Zusammenhang mit den anderen Parametern der Datenstruktur und der Struktur der Datenstruktur als solche bewertet. Es ist bei der Semantik-Konvertierung durchaus möglich, daß ein Parameter der einen Struktur in eine Vielzahl von Parametern in der anderen Struktur oder umgekehrt gewandelt wird oder daß aus dem Vorliegen einer bestimmten Struktur in der einen Abbildung ein oder mehrere Parameter in der anderen Abbildung resultieren oder umgekehrt. Wesentlich ist hierbei, daß bei der Semantik-Konvertierung der Bedeutungsgehalt der beiden Abbildungen erhalten bleibt, obwohl die einzelnen Parameter und Strukturen gemäß der jeweiligen Semantik ganz unterschiedliche Bedeutungen haben.

Die Funktionseinheiten PU1 bis PU3 stellen Protokoll-Funktionseinheiten dar. Sie tauschen über eine erste Schnittstelle Netzwerkmanagement-Nachrichten, die einem jeweiligen speziellen Netzwerkmanagement-Protokoll zugeordnete sind, mit einem Netzelement oder einem Netzelement-Manager aus und bearbeiten das jeweilige spezielle Netzwerkmanagement-Protokoll.e

Die Funktionseinheiten PU1 bis PU3 stellen jeweils eine Konvertierung der Syntax der Daten und Funktionen eines jeweiligen Netzwerkmanagement-Protokolls zu einer einheitlichen Syntax durch.

Bei Netzwerkmanagement-Protokollen handelt es sich um die Protokolle auf der Anwendungsebene, die auf die jeweiligen spezifischen für die jeweilige Managementfunktion notwendigen vordefinierten Funktionen auf der Anwendungsebene zurückgreifen. Beispiele für Netzwerkmanagement-Protokolle sind das CMIP Protokoll oder das SNMP Protokoll.

Die Funktionseinheiten TU1 bis TU3 stellen Transportprotokoll-Funktionseinheiten dar. Sie bearbeiten jeweils unterschiedliche Transportprotokolle, die dem Transport von Netzwerkmanagementprotokoll-Nachrichten dienen.

Die Funktionseinheiten TU1 bis TU3 bearbeiten die Kommunikationsprotokolle der Kommunikationsnetze KN2, KN5 bzw. KN1, über die die Konvertereinheit KON1 mit den Netzelementen NE1 bis NE3 und der Netzführungszentrale OS verbunden sind. Bei diesen Protokollen handelt es sich beispielsweise u. U. um den gesamten Protokollstack des Nr. 7 Signalisierungssystems, um X.25 Protokolle, LAN Protokolle (LAN = Local Area Network) wie das ETHERNET Protokoll, MAN Protokolle (MAN = Metropolitan Area Network) wie das DQDB Protokoll, ATM Protokolle oder den TCP/IP Protokollstack.

Zur Durchführung der Konverterfunktion für den Austausch von Netzwerkmanagement-Nachrichten zwischen dem Netzelement NE1 und dem Netzelement-Manager NEM interagieren die Funktionseinheiten TU3, PU3, SU2, SU1, PU1 und TU2. Zur Durchführung der Konverterfunktion für den Austausch von Netzwerkmanagement-Nachrichten zwischen dem Netzelement NE2 und dem Netzelement-Manager NEM interagieren die Funktionseinheiten TU1, PU3, SU2, SU1, PU1 und TU2. Zur Durchführung der Konverterfunktion für den Austausch von Netzwerkmanagement-Nachrichten zwischen dem Netzelement NE1 und dem Netzelement-Manager NEM interagieren die Funktionseinheiten TU1, PU2, SU3, SU1, PU1 und TU2. Jede dieser Konverterfunktionen wird von einem eigenständigen Prozeß durchgeführt, für den die daran beteiligten Funktionseinheiten instantiiert sind.

Die Steuereinheit CDC koppelt dynamisch Funktionseinheiten der ersten, zweite und dritten Gruppe von Funktionseinheiten, um eine jeweilige Kommunikation zwischen einem Netzelement und einem Netzelement-Managern durch eine jeweilige angepaßte Konvertierung der Netzwerkmanagement-Nachrichten zu unterstützen. Sie ermittelt hierzu den für die jeweilige Kommunikation notwendigen Konvertierungsbedarf und ermittelt die für diese Konvertierung benötigten Funktionseinheiten. Anschließend instantiiert sie für die jeweilige Kommunikation die ermittelten Funktionseinheiten und veranlaßt die für die Konvertierung notwendigen Verknüpfungen innerhalb dieses Satzes von Funktionseinheiten.

Auf die Steuereinheit CDC könnte auch verzichtet werden. Die Steuereinheit CDC bewirkt den Vorteil, daß die Konvertereinheit KONlautomatisch immer die korrekte Konvertierung bereitstellt, wenn ein neues Netzelement oder eine neue Netzführungszentrale mit der Konvertereinheit KON1 verbunden wird.

Es ist auch möglich, daß die für eine Konvertierung notwendigen Verknüpfungen zwischen den Funktionseinheiten der ersten, zweite und dritten Gruppe von Funktionseinheiten online, beispielsweise durch die Netzführungszentrale OS, lokal, beispielsweise über ein Bedienterminal oder bei Erstellung der SW eingerichtet werden.

Anhand von Fig. 3 wird nun der detaillierte Aufbau der Konvertereinheit KON2 verdeutlicht.

Fig. 3 zeigt einen Ausschnitt aus dem funktionellen Aufbau der Konvertereinheit KON2.

Die Konvertereinheit KON2 ist über eine Schnittstelle lNT1' mit dem Netzelementen NE4 und über eine Schnittstelle INT2' mit dem Netzelement-Manager NEM verbunden. Die Konvertereinheit KON2 weist sieben Funktionseinheiten SU1' bis SU3', PU1' bis PU3'und TU4 und die Funktionseinheiten TU1 und TU2 auf. Es ist natürlich auch möglich, daß die Konvertereinheit KON2 über die Schnittstelle lNT1' mit einer anderen Anzahl von Netzelementen verkoppelt ist.

Die Funktionseinheiten SU1' bis SU3'der Konvertereinheit KON2 sind wie die Funktionseinheiten SU1 bis SU3 nach Fig. 2 aufgebaut, mit dem Unterschied, daß sie keine Konvertierung einer Abbildung basierend auf einer spezifischen Semantik in eine Abbildung in eine allgemeine Semantik durchführen, sondern bereits eine Abbildung zwischen zwei verschiedenen spezifischen Semantika durchführen. Eine Interaktion zwischen den Funktionseinheiten SU' bis SU3'der der ersten Gruppe von Funktionseinheiten entfällt so.

Die Funktionseinheiten PU1' bis PU3'der Konvertereinheit KON2 sind wie die Funktionseinheiten PU1 bis PU3 nach Fig. 2 aufgebaut, mit dem Unterschied, daß die Funktionseinheiten PU1 bis PU3 bereits eine Syntaxkonvertierung zwischen Daten und Funktionen zweier verschiedenartiger Netzwerkmanagement-Protokolle durchführen. Im Gegensatz zu dem Ausführungsbeispiel nach Fig. 2 ist somit nur noch eine Funktionseinheit der zweiten Gruppe von Funktionseinheiten an der Konvertierung beteiligt.

Die Funktionseinheiten TU1, TU2 und TU4 der Konvertereinheit KON2 sind wie die Funktionseinheiten TU1 bis TU3 nach Fig. 2 aufgebaut, mit der Maßgabe, daß die Funktionseinheit TU4 die Kommunikationsprotokolle des Kommunikationsnetzes KN3 bearbeitet.

Ansonsten ist die Konvertereinheit KON2 entsprechend der Konvertereinheit KON1 nach Fig. 1 aufgebaut.

Zur Durchführung der Konverterfunktion für den Austausch von Netzwerkmanagement-Nachrichten zwischen dem Netzelement NE4 und dem Netzelement-Manager NEM interagieren die Funktionseinheiten TU4, PU3', SU3' und TU2.

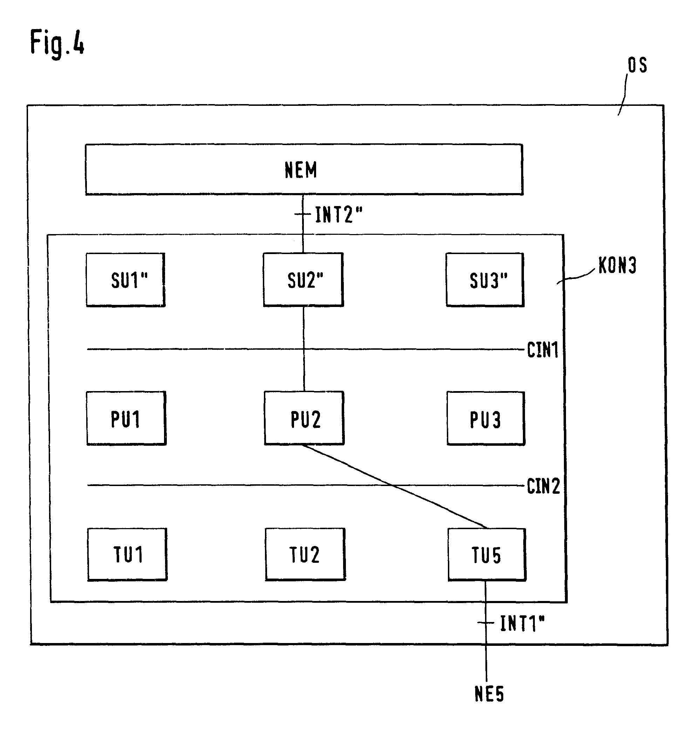

Anhand von Fig. 4 wird nun der detaillierte Aufbau der Konvertereinheit KON3 verdeutlicht.

Fig. 3 zeigt einen Ausschnitt aus dem funktionellen Aufbau der Netzführungszentrale OS mit der Konvertereinheit KON3 und dem Netzelement-Manager NEM.

Die Konvertereinheit KON3 ist über eine Schnittstelle INT1" mit dem Netzelementen NE5 und über eine Schnittstelle INT2" mit dem Netzelement-Manager NEM verbunden. Die Konvertereinheit KON3 weist vier Funktionseinheiten SU1" bis SU3" und TU4 und die Funktionseinheiten PU1 bis PU3, TU1 und TU2 auf. Es ist natürlich auch möglich, daß die Konvertereinheit KON2 über die Schnittstelle INT1" mit einer anderen Anzahl von Netzelementen verkoppelt ist.

Die Funktionseinheiten SU1" bis SU3" der Konvertereinheit KON3 sind wie die Funktionseinheiten SU1 bis SU3 nach Fig. 2 aufgebaut, mit dem Unterschied, daß sie keine Konvertierung einer Abbildung basierend auf einer spezifischen Semantik in eine Abbildung in eine allgemeine Semantik durchführen, sondern jeweils eine Abbildung von einer spezifischen Semantik in die Semantik der Steuerung des Netzelement-Managers durchführen. Eine Interaktion zwischen den Funktionseinheiten SU1" bis SU3" der ersten Gruppe von Funktionseinheiten entfällt somit, die Funktionseinheiten SU1" bis SU3" sind direkt mit dem Netzelement-Manager NEM steuerungstechnisch gekoppelt. Die Konvertereinheit KON3 bildet somit eine Vorschaltfunktion für den Netzelement-Manger, die bereits alle Protokollbearbeitungsfunktionen sowie eine Semantik-Konvertierung für den Netzelement-Manager ausführt.

Die Funktionseinheiten PU1 bis PU3 der Konvertereinheit KON2 sind nach Fig. 2 aufgebaut.

Die Funktionseinheiten TU1, TU2 und TU5 der Konvertereinheit KON2 sind wie die Funktionseinheiten TU1 bis TU3 nach Fig. 2 aufgebaut, mit der Maßgabe, daß die Funktionseinheit TU5 die Kommunikationsprotokolle des Kommunikationsnetzes KN4 bearbeitet.

Ansonsten ist die Konvertereinheit KON2 entsprechend der Konvertereinheit KON1 nach Fig. 1 aufgebaut.

Zur Durchführung der Konverterfunktion für den Austausch von Netzwerkmanagement-Nachrichten zwischen dem Netzelement NE4 und dem Netzelement-Manager NEM interagieren die Funktionseinheiten TU5, PU2 und SU2".

Es ist auch möglich, daß die Konvertereinheit KON3 in die Steuerung eines Netzelements integriert ist. Die Funktionseinheiten SU1" würden dann jeweils eine Abbildung von einer spezifischen Semantik in die Semantik der Steuerung des Netzelements durchführen und wären steuerungstechnisch mit der Netzelementsteuerung gekoppelt. Die Kopplung könnte beispielsweise durch Zugriff auf eine Gruppe von Zustandsdaten und Steuerfunktionen der Netzelementsteuerung ermöglicht werden. Eine weitere Möglichkeiten der Verkopplung bestehen in dem Senden und dem Empfang von Nachrichten an Objekte der Netzelementsteuerung. Noch eine weitere Möglichkeiten der Verkopplung bestehen in dem Senden von Nachrichten an in der Netzelementsteuerung ablaufende endliche (Zustands-)Automaten (Finite State Machines), die den Ablauf dieser Automaten beeinflussen und dem Abhorchen von Ereignisnachrichten, die von solchen Automaten gesendet werden. In ähnlicher Weise können auch die Funktionseinheiten SU1" bis SU3" nach Fig. 4 mit der Steuerung des Netzelement-Managers NEM verkoppelt werden.

## Patentansprüche

1. Konvertereinheit (KON1 bis KON3) zur Unterstützung der Kommunikation zwischen mindestens einem Netzelement (NE1 bis NE5) und mindestens einem Netzelement-Manager (NEM), wobei die Konvertereinheit (KON1 bis KON3) mit einer ersten Schnittstelle (INT1, INT1', INT1") zur Kommunikation mit dem mindestens einen Netzelement und mit einer zweiten Schnittstelle (INT2, INT2', INT2") zur Kommunikation mit dem mindestens einen Netzelement-Manager (NEM) versehen ist, **dadurch gekennzeichnet**, daß die Konvertereinheit (KON1 bis KON3) mit ein oder mehreren ersten Funktionseinheiten (PU1 bis PU2; PU1' bis PU3') und mit diesen ersten Funktionseinheiten über eine einheitliche Schnittstelle (CIN1) verkoppelbaren ein oder mehreren zweiten Funktionseinheiten (SU1 bis SU3; SU1' bis SU3'; SU1" bis SU3") versehen ist, daß die ein oder mehreren ersten Funktionseinheiten (PU1 bis PU2; PU1' bis PU3') jeweils so ausgestaltet sind, daß sie über eine Schnittstelle Netzwerkmanagement-Nachrichten (CIN2), die einem jeweiligen speziellen Netzwerkmanagement-Protokoll zugeordnet sind, mit einem Netzelement oder einem Netzelement-Manager austauschen und das jeweilige spezielle Netzwerkmanagement-Protokoll bearbeiten, und daß die ein oder mehreren zweiten Funktionseinheiten (SU1 bis SU3; SU1' bis SU3'; SUl" bis SU3") jeweils so ausgestaltet sind, daß sie eine Darstellung basierend auf einer jeweiligen ersten Semantik auf eine Darstellung basierend auf einer jeweiligen zweiten Semantik abbilden und daß sie die jeweilige Abbildungsfunktion den ersten Funktionseinheiten (PU1 bis PU2; PU1' bis PU3') jeweils über die für alle ersten Funktionseinheiten einheitliche Schnittstelle (CIN1) anbietet.

2. Konvertereinheit (KON1, KON3) nach Anspruch 1, dadurch gekennzeichnet, daß erste Funktionseinheiten (PU1 bis PU3) eine Konvertierung der Syntax der Daten und Funktionen des jeweiligen Netzwerkmanagement-Protokolls zu einer einheitlichen Syntax durchführen.

3. Konvertereinheit (KON2) nach Anspruch 1, dadurch gekennzeichnet, daß erste Funktionseinheiten (PU1' bis PU3') eine Syntaxkonvertierung zwischen Daten und Funktionen zweier verschiedenartiger Netzwerkmanagement-Protokolle durchführen.

4. Konvertereinheit (KON2) nach Anspruch 1, dadurch gekennzeichnet, daß die erste Semantik und die zweite Semantik der zweiten Funktionseinheiten (SU1' bis SU3) jeweils verschiedenartige, spezifische Semantika sind.

5. Konvertereinheit (KON1) nach Anspruch 1, dadurch gekennzeichnet, daß die erste Semantik der zweiten Funktionseinheiten (SU1 bis SU3) eine spezifische Semantik und die zweite Semantik der zweiten Funktionseinheiten (SU1 bis SU3) eine allgemeine Semantik ist und zweite Funktionseinheiten (SU1 bis SU3) über die die allgemeine Semantik miteinander verkoppelt sind.

6. Konvertereinheit (KON1 bis KON3) nach Anspruch 1, dadurch gekennzeichnet, daß die Konvertereinheit (KON1 bis KON3) weiter über ein oder mehrere dritte Funktionseinheiten (TU1 bis TU5) verfügt, die eine Bearbeitung von Transportprotokollen durchführt, die Netzwerkmanagement-Nachrichten transportieren.

7. Konvertereinheit (KON1) nach Anspruch 6, dadurch gekennzeichnet, daß die Konvertereinheit (KON1) weiter mit einer Steuereinheit (CDC) versehen ist, die so ausgestaltet ist, daß sie dynamisch erste, zweite und dritte Funktionseinheiten (SU1 bis SU3, PU1 bis PU3) zur Unterstützung der Kommunikation zwischen Netzelementen und Netzelement-Managern verkoppelt.

8. Konvertereinheit (KON1, KON2) nach Anspruch 1, dadurch gekennzeichnet, daß die Konvertereinheit (KON1, KON2) über die erste Schnittstelle (INT1; INT1') und mindestens ein Kommunikationsnetz (KN1 bis KN3) mit dem mindestens einen Netzelement (NE1 bis NE4) verkoppelt ist und über die zweite Schnittstelle (INT2, INT2') und mindestens ein Kommunikationsnetz (KN5) mit dem mindestens einen Netzelement-Manager (NEM) verbunden ist.

9. Konvertereinheit (KON3) nach Anspruch 1, dadurch gekennzeichnet, daß die Konvertereinheit (KON3) über die zweite Schnittstelle (INT2") mit der Steuerung des Netzelement-Managers verkoppelt ist und über die erste Schnittstelle (INT1 ") und mindestens ein Kommunikationsnetz (KN4) mit dem mindestens einen Netzelement (NE5) verbunden ist, und daß die zweite Semantik der zweiten Funktionseinheiten (SU1" bis SU3") die Semantik der Steuerung des Netzelement-Managers ist.

10. Konvertereinheit nach Anspruch 1, dadurch gekennzeichnet, daß die Konvertereinheit über die erste Schnittstelle mit der Steuerung des Netzelements verkoppelt ist und über die zweite Schnittstelle und ein Kommunikationsnetz mit dem mindestens einen Netzelement-Manager verbunden ist, und daß die zweite Semantik der zweiten Funktionseinheiten die Semantik der Steuerung des Netzelements ist.

11. Verfahren zur Unterstützung der Kommunikation zwischen mindestens einem Netzelement (NE1 bis NE5) und mindestens einem Netzelement-Manager (NEM), wobei bei dem Verfahren die Kommunikation zwischen dem mindestens einen Netzelement und dem mindestens einen Netzelement-Manager über eine Konvertereinheit geführt wird,
**dadurch gekennzeichnet**, daß die Konvertereinheit (KON1 bis KON3) von ein oder mehreren ersten Funktionseinheiten (PU1 bis PU2; PU1' bis PU3') und ein oder mehreren zweiten Funktionseinheiten (SU1 bis SU3; SU1' bis SU3'; SU1" bis SU3") gebildet wird, daß die ein oder mehreren ersten Funktionseinheiten (PU1 bis PU2; PU1' bis PU3') mit den ein oder mehreren zweiten Funktionseinheiten (SU1 bis SU3; SU1' bis SU3'; SU1" bis SU3") über eine einheitliche Schnittstelle (CIN1) interagieren, daß die ein oder mehreren ersten Funktionseinheiten (PU1 bis PU2; PU1' bis PU3') über eine Schnittstelle Netzwerkmanagement-Nachrichten (CIN2), die einem jeweiligen speziellen Netzwerkmanagement-Protokoll zugeordnet sind, mit einem Netzelement oder einem Netzelement-Manager austauschen und das jeweilige spezielle Netzwerkmanagement-Protokoll bearbeiten, daß die ein oder mehreren zweiten Funktionseinheiten (SU1 bis SU3; SU1' bis SU3'; SU1" bis SU3") jeweils eine Darstellung basierend auf einer jeweiligen ersten Semantik auf eine Darstellung basierend auf einer jeweiligen zweiten Semantik abbilden und daß die ein oder mehreren zweiten Funktionseinheiten (SU1 bis SU3; SU1' bis SU3'; SU1" bis SU3") die jeweilige Abbildungsfunktion den ersten Funktionseinheiten (PU1 bis PU2; PU1' bis PU3') jeweils über die für alle ersten Funktionseinheiten einheitliche Schnittstelle (CIN1) anbietet.
